# EUROPÄISCHE PATENTSCHRIFT

(11) **EP 2 088 007 B1**
(45) Veröffentlichungstag und Bekanntmachung des Hinweises auf die Patenterteilung: **17.11.2010**
(21) Anmeldenummer: 09150828.3
(22) Anmeldetag: 19.01.2009
(51) Int. Cl.: B60C 11/01

(54) **Fahrzeugluftreifen**
Pneumatic tyres for a vehicle
Pneus de véhicule

(30) Priorität: 05.02.2008 DE 102008007548
(43) Veröffentlichungstag der Anmeldung: 12.08.2009
(73) Patentinhaber: Continental Reifen Deutschland GmbH, 30165 Hannover (DE)
(72) Erfinder: Behr, Ulrich, 30169 Hannover (DE); Seng, Matthias, 30449 Hannover (DE); Vennbörger, Martin, 30625 Hannover (DE)
(74) Vertreter: Finger, Karsten

(56) Entgegenhaltungen:
- EP-A- 0 232 242
- WO-A-03/020538
- DE-A1- 4 000 339
- NL-A- 6 804 874
- US-A1- 2004 084 125
- US-B1- 6 533 007

## Beschreibung

Die Erfindung betrifft einen Fahrzeugluftreifen mit einem Laufstreifen mit einer Schulterblockreihe bei zumindest einer Reifenschulter, welche abgerundet ausgeführt ist, wobei die Blöcke der Schulterblockreihe durch Quernuten voneinander getrennt sind, die axial außerhalb des bodenberührenden Teiles des Laufstreifens in Richtung Seitenwand auslaufen, wobei die Schulterblöcke axial außerhalb des bodenberührenden Teiles des Laufstreifens in zwischen den Quemutausläufem befindliche und im Wesentlichen in radialer Richtung verlaufende Schulterflanken fließend übergehen.

Fahrzeugluftreifen für Personenkraftwagen sind üblicherweise derart ausgeführt, dass die schulterseitig vorgesehenen Quernuten über die Bodenaufstandsfläche des Laufstreifens hinaus verlaufen und bis zum Beginn der Seitenwand unter Verringerung ihrer Tiefe auslaufen. Der Übergang vom bodenberührenden Abschnitt des Laufstreifens in den so genannten Off-Shoulder-Bereich ist fließend und mit einer gerundeten Kontur ausgeführt.

Aus der DE-A-4000339 ist ein Luftreifen bekannt, welcher einen Laufstreifenabschnitt zwischen den Kanten des Laufstreifens und zwei radial von den jeweiligen Laufstreifenkanten erstreckende Seitenwandabschnitte aufweist, sodass eine die Umfangsaußenfläche des Laufstreifenabschnittes bestimmte Laufstreifenfläche und eine radial von jeder Laufstreifenkante abstehende Seitenwandfläche definiert sind. Der Laufstreifenabschnitt weist an seiner Oberseite in Umfangsrichtung mit Abstand versehene Quernuten auf, die an der Seitenwandfläche derart münden, dass jeweils entlang jeder Schulterkante in Reihen angeordnete Schulterblöcke definiert werden.

Jeder Schulterblock ist an seiner Oberseite mit einer Vertiefung versehen, deren axial inneres Ende begrenzt ist, während ihr axial äußeres Ende an der axial äußeren Seite des Schulterblocks mündet. Die Seitenwandabschnitte an der axial äußeren Seite jedes Schulterblocks sind mit einem Fortsatz versehen, der axial über die Seitenwandfläche nach außen vorsteht und eine obere Fläche besitzt, die direkt in den Boden der Vertiefung übergeht. Die Vorsprünge an den Schulterbereichen des Reifens sollen beim Fahren auf verschneiter Straße in Berührung mit der Reifenspur kommen, wenn die Straße mit gespurtem Schnee bedeckt ist, um das Traktionsverhalten auf verschneiten Straßen zu verbessern.

Bei dem aus der WO 03/020538 A bekannten Fahrzeugluftreifen ist ein aus Profilblöcken zusammengesetzter Laufstreifen vorgesehen, welcher vor allem für den Einsatz unter Offroad-Bedingungen geeignet sein soll. In den Schulterbereichen des Reifens sind besondere, als Seitenwandblöcke bezeichnete Blöcke angeordnet, wobei einige dieser Blöcke an die im Boden berührenden Bereich des Laufstreifens verlaufenden Schulterblöcke anschließen und andere Blöcke zwischen den Ausläufen der Schulterblöcke in den Schulterbereichen angeordnet bzw. positioniert sind.

Der Erfindung liegt die Aufgabe zugrunde, bei einem Reifen der eingangs genannten Art die Traktion unter Offroad-Bedingungen oder in tieferem Schnee auf eine besonders zweckmäßige und optisch ansprechende Art zu verbessern.

Gelöst wird die gestellte Aufgabe erfindungsgemäß dadurch, dass auf den Schulterflanken der Schulterblöcke jeweils zumindest ein flacher Flankenblock angeordnet ist, welcher entweder eine konstante Höhe oder eine in Richtung Seitenwand zunehmende Höhe aufweist und von zumindest im Wesentlichen in radialer Richtung verlaufenden Traktionskanten begrenzt ist.

Erfindungsgemäß ausgeführte Fahrzeugluftreifen weisen daher im Off-Schulter-Bereich flache Flankenblöcke auf, die Traktionskanten zur Verfügung stellen, die sich beim Fahren auf weichem Untergrund mit diesem verzahnen können.

Gemäß einer bevorzugten Ausführungsform der Erfindung weisen die Flankenblöcke, im radialen Schnitt des Reifens betrachtet, einen keilförmigen Querschnitt auf. Die Keilform hat sich als besonders günstig für einen optimalen Verlauf der Traktionskanten erwiesen, sodass der Verzahnungseffekt besonders deutlich ist.

Für einen guten Verzahnungseffekt der Traktionskanten ist es ferner ausreichend, wenn die größte Höhe der Flankenblöcke von 1,5 mm bis 2 mm beträgt.

Es ist von Vorteil, wenn die zur Verfügung stehende Fläche der Schulterflanken für die Anordnung von Flankenblöcken weitgehend ausgenützt wird. Es ist daher von Vorteil, wenn der Flankenblock beziehungsweise die Flankenblöcke die Fläche der Schulterflanken zwischen den Quernutausläufern zumindest weitgehend bedecken.

Weitere Merkmale, Vorteile und Einzelheiten der Erfindung werden anhand der Zeichnung, die schematisch Ausführungsbeispiele darstellt, näher beschrieben. Dabei zeigen
Fig. 1 eine Ansicht eines Abschnittes eines Schulterbereiches eines Fahrzeugluftreifens mit einer Ausführungsform der Erfindung,
Fig. 2 und Fig. 3 jeweils eine zu Fig. 1 analoge Darstellung mit weiteren Ausführungsformen der Erfindung.

Erfindungsgemäß ausgeführte Fahrzeugluftreifen sind insbesondere für den Einsatz auf Personenkraftwagen, Offroad-Fahrzeugen, oder so genannten SUVs (Sport Utility Vehicles) vorgesehen und weisen einen Laufstreifen auf, welcher zumindest an der Außenschulter mit einer in Umfangsrichtung umlaufenden Blockreihe versehen ist.

Die Zeichnungsfiguren zeigen jeweils eine Ansicht eines Abschnittes eines Schulterbereiches, derart, dass ein Schnitt durch die Schulter eines Fahrzeugluftreifens und in perspektivischer Ansicht zwei Schulterblöcke 2 einer Schulterblockreihe 1 dargestellt sind. Von den Bestandteilen des Fahrzeugluftreifens sind ein zweilagiger Gürtelverband 3, eine einlagige Radialkarkasse 4, ein Laufstreifen 5 und die an die gezeigte Schulter anschließende Seitenwand 6 dargestellt. Die in den Figuren eingezeichnete Linie s kennzeichnet den Rand des Laufstreifens 5 in der Bodenaufstandsfläche bei auf einer Felge montierten und unter Nenndruck und Nennlast gesetzten Reifen. In den Ausführungsbeispielen ist ferner eine Umfangsnut 7 angedeutet, welche die Schulterblockreihe 1 von den in Richtung Laufstreifenmitte anschließenden weiteren Profilelementen, die gesondert nicht beschrieben sind, trennt.

Wie die Zeichnungsfiguren zeigen, sind die Schulterblöcke 2 voneinander durch Quernuten 8 getrennt, die über den Laufstreifenrand s hinaus verlaufen und deren Tiefe außerhalb des Laufstreifenrandes s in Richtung Seitenwand 6 kontinuierlich geringer wird. Bei den gezeigten Ausführungsformen ist ferner jeder Schulterblock 2 mit zwei in Draufsicht wellenförmig verlaufenden im Wesentlichen parallel zu den Quernuten 8 orientierten Einschnitten 9 versehen. Die Einschnitte 9 können in bekannter Weise ausgeführt sein und insbesondere eine Breite in der Größenordnung von 0,4 mm bis 0,6 mm aufweisen.

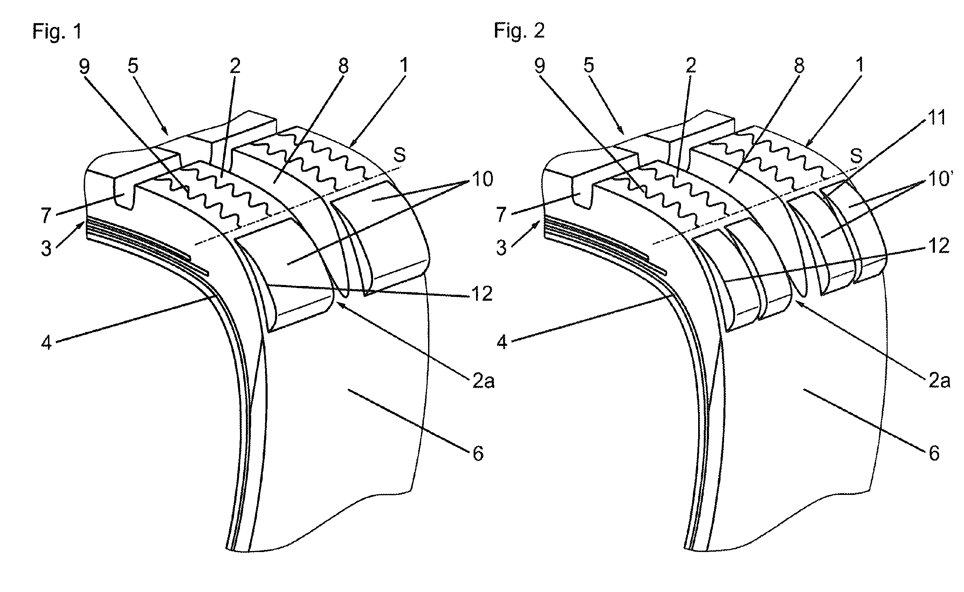

Der Schulterbereich ist mit einer runden Außenkontur versehen, sodass der Übergang von der Außenseite der Blöcke 2 in die Schulterflanken 2a, die bei der Seitenwand 6 enden und zwischen den Ausläufern der Quernuten 8 verlaufen, fließend ist. Auf jeder Schulterflanke 2a befindet sich zumindest ein aus dem Gummimaterial des Laufstreifens 1 mitgeformter und mitgebildeter Flankenblock 10, 10', 10". Bei der in Fig. 1 gezeigten Ausführungsform ist der Flankenblock 10 in der Form eines flachen, in Draufsicht rechteckigen Keiles ausgeführt, der zumindest im Wesentlichen die Fläche der Schulterflanke 2a bedeckt. An seinem der Seitenwand 6 zugewandten Ende weist der Flankenblock 10 seine größte Höhe auf, die insbesondere zwischen 1,5 mm und 2 mm beträgt. Die Höhe des Flankenblockes 10 verringert sich bis zu seinem Ende nahe des Laufstreifenrandes s und kann hier kleiner als 0,5 mm bzw. bis zu Null sein. Die in radialer Richtung verlaufenden Seitenkanten des Flankenblockes 10 bilden Traktionskanten 12.

Bei der in Fig. 2 ausgeführten Ausführungsvariante befinden sich auf jeder Schulterflanke 2a zwei keilartige, insbesondere gleich große Flankenblöcke 10', die voneinander durch eine schmale, beispielsweise 1 mm bis 3 mm breite, parallel zur Quernut 8 verlaufende Rille 11 getrennt sind. Die Flankenblöcke 10' bedecken ansonsten zumindest im Wesentlichen die Fläche der jeweiligen Schulterflanke 2a. Die Keilform ist analog zur Keilform des Blockes 10 gemäß Fig. 1. Bei dieser Ausführungsvariante wird eine größere Anzahl von Traktionskanten 12 zur Verfügung gestellt.

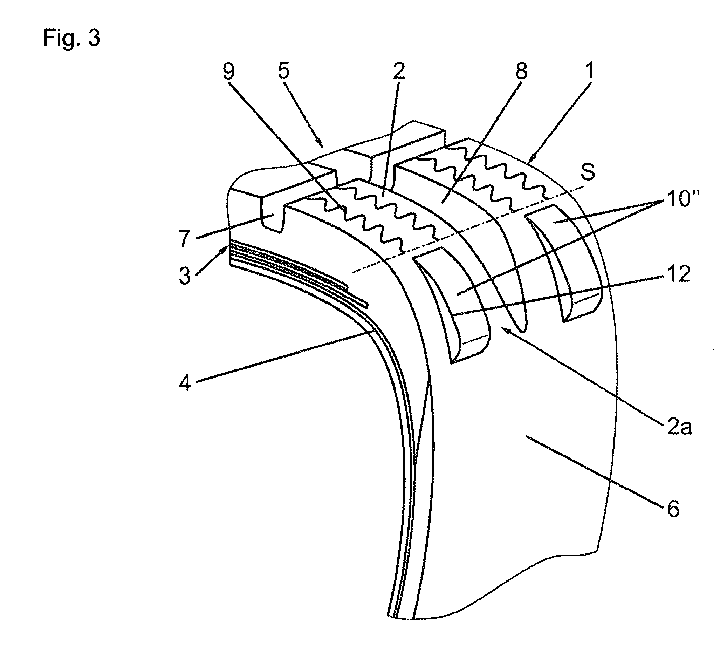

Bei der in Fig. 3 gezeigten Ausführungsvariante sitzt auf jeder Schulterflanke 2a mittig ein keilförmig ausgeführter Flankenblock 10", welcher etwa die Hälfte der Fläche der Schulterflanke 2a einnimmt. Die Erstreckung des Flankenblockes 10" zwischen dem Laufstreifenrand s und der Seitenwand 6 sowie seine Keilform entsprechen den beschriebenen Ausführungsformen.

Erfindungsgemäß ausgeführte Schulterflanken befinden sich vorzugsweise an beiden Reifenschultern.

Die Erfindung ist auf die dargestellten Ausführungsbeispiele nicht eingeschränkt. Es gibt eine Vielzahl von Möglichkeiten, Flankenblöcke auszubilden. Die Flankenblöcke können beispielsweise eine konstante Höhe von insbesondere 1 mm bis 2 mm aufweisen, sie können in Draufsicht beliebige Formen, beispielsweise eine Dreieck- oder Trapezform, aufweisen, sofern Traktionskanten zur Verfügung gestellt werden, die höchsten unter 45 ° zur radialen Richtung verlaufen.. Es ist ferner möglich, mehr als zwei Flankenblöcke pro Schulterflanke vorzusehen.

Die Flankenblöcke 10,10',10" unterstützen bei einem Einsatz des Fahrzeugluftreifens auf Untergründen, in welche der Reifen tiefer einsinkt, wie beispielsweise Schnee, Schneematsch, Schotter oder Lehm, die Traktion bzw. Kraftübertragung vom Reifen auf den Untergrund, da sie zusätzliche Kanten für die Traktion zur Verfügung stellen. Die sonstigen Eigenschaften des Laufstreifens werden durch die Anordnung der Flankenblöcke 10,10',10" nicht beeinflusst.

### Bezugsziffernliste

- 1: Blockreihe
- 2: Schulterblöcke
- 2a: Schulterflanke
- 3: Gürtelverband
- 4: Radialkarkasse
- 5: Laufstreifen
- 6: Seitenwand
- 7: Umfangsnut
- 8: Quernut
- 9: Einschnitt
- 10: Flankenblock
- 10': Flankenblock
- 10": Flankenblock
- 11: Rille
- 12: Traktionskante

## Patentansprüche

1. Fahrzeugluftreifen mit einem Laufstreifen (5) mit einer Schulterblockreihe (1) bei zumindest einer Reifenschulter, welche abgerundet ausgeführt ist, wobei die Blöcke (2) der Schulterblockreihe (1) durch Quernuten (8) voneinander getrennt sind, die axial außerhalb des bodenberührenden Teiles des Laufstreifens (5) in Richtung Seitenwand (6) auslaufen, wobei die Schulterblöcke (2) axial außerhalb des bodenberührenden Teiles des Laufstreifens (5) in zwischen den Quernutausläufern befindliche und im Wesentlichen in radialer Richtung verlaufende Schulterflanken (2a) fließend übergehen,
**dadurch gekennzeichnet,**
**dass** auf den Schulterflanken (2a) der Schulterblöcke (2) jeweils zumindest ein flacher Flankenblock (10, 10', 10") angeordnet ist, welcher entweder eine konstante Höhe oder eine in Richtung Seitenwand (6) zunehmende Höhe aufweist und von zumindest im Wesentlichen in radialer Richtung verlaufenden Traktionskanten (12) begrenzt ist.

2. Fahrzeugluftreifen nach Anspruch 1, **dadurch gekennzeichnet, dass** die Flankenblöcke (10, 10', 10"), im radialen Schnitt des Reifens betrachtet, einen keilförmigen Querschnitt aufweisen.

3. Fahrzeugluftreifen nach Anspruch 1 oder 2, **dadurch gekennzeichnet, dass** die größte Höhe der Flankenblöcke (10, 10', 10") 1,5 mm bis 2 mm beträgt.

4. Fahrzeugluftreifen nach einem der Ansprüche 1 bis 3, **dadurch gekennzeichnet, dass** der Flankenblock (10) bzw. die Flankenblöcke (10') die Fläche der Schulterflanken (2a) zwischen den Quemutausläufem zumindest weitgehend bedecken.

## Claims

1. Pneumatic vehicle tyre with a tread rubber (5) with a row of shoulder blocks (1) on at least one tyre shoulder, which is of a rounded configuration, the blocks (2) of the row of shoulder blocks (1) being separated from one another by transverse grooves (8), which run out in the direction of the sidewall (6) axially outside the part of the tread rubber (5) that comes into contact with the ground, the shoulder blocks (2) going over axially outside the part of the tread rubber (5) that comes into contact with the ground smoothly into shoulder flanks (2a) that are located between the transverse groove runouts and extend substantially in the radial direction, **characterized in that** on the shoulder flanks (2a) of the shoulder blocks (2) there is respectively arranged at least one flat flank block (10, 10', 10"), which has either a constant height or a height increasing in the direction of the sidewall (6) and is bounded by traction edges (12) extending at least substantially in the radial direction.

2. Pneumatic vehicle tyre according to Claim 1, **characterized in that**, considered in radial section of the tyre, the flank blocks (10, 10', 10") have a wedge-shaped cross section.

3. Pneumatic vehicle tyre according to Claim 1 or 2, **characterized in that** the greatest height of the flank blocks (10, 10', 10") is 1.5 mm to 2 mm.

4. Pneumatic vehicle tyre according to one of Claims 1 to 3, **characterized in that** the flank block (10) or the flank blocks (10') at least largely cover the area of the shoulder flanks (2a) between the transverse groove runouts.

## Revendications

1. Bandage pneumatique pour véhicule, présentant une bande de roulement (5) dotée d'une rangée (1) de blocs d'épaulement sur au moins un épaulement arrondi du bandage,
les blocs (2) de la rangée (1) de blocs d'épaulement étant séparés les uns des autres par des rainures transversales (8) qui s'étendent axialement en direction de la paroi latérale (6) à l'extérieur de la partie de la bande de roulement (5) en contact avec le sol,
les blocs d'épaulement (2) se prolongeant de manière continue et axialement à l'extérieur de la partie de la bande de roulement (5) en contact avec le sol en flancs d'épaulement (2a) situés entre les prolongements des rainures transversales et s'étendant essentiellement dans la direction radiale,
**caractérisé en ce que**
un ou plusieurs blocs plats (10, 10', 10") de flanc sont disposés sur chacun des flancs d'épaulement (2a) des blocs d'épaulement (2) et présentent soit une hauteur constante soit une hauteur qui croît dans la direction de la paroi latérale (6) et sont délimités par des arêtes de traction (12) qui s'étendent au moins essentiellement dans la direction radiale.

2. Bandage pneumatique pour véhicule selon la revendication 1, **caractérisé en ce que** dans une coupe radiale du bandage de roue, les blocs (10, 10', 10") de flanc présentent une section transversale en forme de biseau.

3. Bandage pneumatique pour véhicule selon les revendications 1 ou 2, **caractérisé en ce que** la plus grande hauteur des blocs de flancs (10, 10', 10") est de 1,5 mm à 2 mm.

4. Bandage pneumatique pour véhicule selon l'une des revendications 1 à 3, **caractérisé en ce que** le bloc de flanc (10) ou les blocs de flanc (10') couvrent au moins largement la surface des flancs (2a) d'épaulement entre les prolongements des rainures transversales.
